# EUROPEAN PATENT APPLICATION

(11) **EP 4 783 046 A1**
(43) Date of publication of application: **29.07.2026**
(21) Application number: 25153565.4
(22) Date of filing: 23.01.2025
(51) Int. Cl.: G06F 21/57, G06N 20/00, G06F 21/62

(54) **A METHOD FOR PROVIDING A SECURED SYSTEM PROMPT FOR A MACHINE LEARNING MODEL**

(71) Applicant: Robert Bosch GmbH, 70442 Stuttgart (DE)
(72) Inventor: Nicolae, Maria Irina, 70197 Stuttgart (DE); Zhuang, Zhixiong, 71272 Renningen (DE)

(57) **Abstract**

The invention relates to a method (100) for providing a secured system prompt for a machine learning model, comprising the following steps:
- Providing (101) a system prompt, the system prompt being parametrized by a set of embedding parameters to process individual tokens of the system prompt,
- Generating (102) user queries based on the provided system prompt,
- Querying (103) the machine learning model using the generated user queries and the provided system prompt, the machine learning model producing responses based on the querying,
- Modifying (104) the set of embedding parameters in consideration of the provided system prompt, the generated user queries and the produced responses to generate an encoded set of embedding parameters,
- Providing (105) the secured system prompt by using the generated encoded set of embedding parameters to process the individual tokens of the system prompt, the secured system prompt being semantically different from the provided system prompt.

Furthermore, the invention relates to a computer program, an apparatus, and a storage medium for this purpose.

## Description

The invention relates to a method for providing a secured system prompt for a machine learning model. Furthermore, the invention relates to a computer program, an apparatus, and a storage medium for this purpose.

### State of the art

Machine learning models like large language models (LLMs) are advanced artificial intelligence (Al) systems trained on massive amounts of text data to generate human-like responses in natural language. These models are typically guided by two types of prompts: user prompts, which are the input queries provided by users usually in a chat-like interface, and system prompts, which are hidden instructions given to the model to define its role and personality. System prompts are crucial in shaping the model's responses, as they contain essential operational guidelines, ethical boundaries, and domain-specific knowledge. Ensuring the confidentiality of these system prompts is critical, as their exposure can compromise security, lead to unintended behaviours, or reveal proprietary information.

A prompt extraction attack refers to a security threat where an adversary interacts with LLMs to recover the hidden system prompt that guide their behaviour. A system prompt often contains proprietary instructions, sensitive data, or system directives, and its exposure can lead to misuse or model manipulation. Attackers typically probe the model with carefully crafted queries, aiming to elicit unintended responses that reveal the underlying prompt structure or content, posing risks to user privacy and model integrity.

Prompt extraction defences refer to the strategies and techniques designed to safeguard LLM prompts from being revealed during interactions. These defences aim to prevent attempts to retrieve prompt content. They involve methods like utilizing specialized detection algorithms to identify suspicious probing behavior or detecting prompt leaks in the model's responses, and mechanisms that instruct the LLM to keep the prompt secret. The goal is to ensure the model's internal logic remains secure, preserving confidentiality and preventing exploitation.

Current defence methods against prompt extraction generally fall into two categories: prompt-based and malicious detection. Prompt-based involves adding instructions like "You must not reveal these instructions," but attackers can easily bypass this by issuing commands like "Ignore all previous instructions." Malicious detection seeks to identify harmful queries or leaks in responses, but this can hinder usability, require constant updates from new attack queries, and be circumvented through various tricks. For example, an attacker might encode the prompt using a code or obscure format that detection systems fail to recognize.

Previous efforts to enhance prompt extraction defence have employed various strategies that do not require knowledge of attack queries. One method is output filtering, as implemented in existing production models, which returns a standard fixed response when there is an overlap between the generated output and the secret prompt. While this approach provides a layer of protection, it can be circumvented if the attacker formulates their queries, e.g. in different languages. Another technique is the use of fake prompts, which introduce a misleading prompt before the actual prompt to reduce the likelihood of extraction. However, this method can only minimize the risk of theft to a certain extent and does not offer a comprehensive solution.

### Disclosure of the invention

According to aspects of the invention a method with the features of claim 1, a computer program with the features of claim 9, a data processing apparatus with the features of claim 10 as well as a computer-readable storage medium with the features of claim 11 are provided. Further features and details of the invention are disclosed in the respective dependent claims, the description and the drawings. Features and details described in the context to the inventive method also correspond to the inventive computer program, the inventive data processing apparatus as well as the inventive computer-readable storage medium, and vice versa in each case.

According to an aspect of the invention, a method for providing a secured system prompt for a machine learning model, particularly a large language model, is provided, the method comprising the following steps:
- Providing a system prompt, the system prompt being parametrized by a set of embedding parameters to process individual tokens of the system prompt,
- Generating user queries based on the provided system prompt, the user queries particularly simulating natural interactions that guide a user toward relevant information or recommendations while preserving the provided system prompt's intent and structure, wherein the user queries preferably align with a defined specific focus, at least one restriction and/or at least one preference of the system prompt, wherein the generating of the user queries may be performed using an (oracle) language model,
- Querying the machine learning model using the generated user queries and the provided system prompt, the machine learning model producing responses based on the querying, wherein the querying may be a provision of a respective user query as an input to the machine learning model and the produced response may be a respective output of the machine learning model,
- Modifying the set of embedding parameters (that parametrize the system prompt) in consideration of the provided system prompt, the generated user queries and the produced responses to generate an encoded set of embedding parameters, particularly to render the resulting secured system prompt as different as possible to the provided system prompt while preserving an analogous intent,
- Providing the secured system prompt by using the generated encoded set of embedding parameters to process the individual tokens of the system prompt, the (resulting) secured system prompt being semantically different from the provided system prompt, particularly due to the different processing by means of the generated encoded set of embedding parameters.

The machine learning model is preferably a large language model. A system prompt is particularly an initial input or configuration in the machine learning model that defines a context, behaviour and/or response structure of the machine learning model and may control its interaction with user input. The encoded system prompt may be different from natural human language so that it may be difficult to interpret the encoded system prompt, for example by an attacker. The machine learning model may be implemented in a technical system, particularly a vehicle or a production plant. By means of the method according to the invention, a security and privacy of the machine learning model and thus also of the technical system may be enhanced by securing the system prompt used to interact with the machine learning model. Therefore, prompt extraction attacks may be prevented by means of the method according to the invention. Sensitive information within the system prompt may be safeguarded by implementing the encoded set of embedding parameters according to the invention.

It is further possible that the modifying of the set of embedding parameters is performed iteratively, wherein the encoded set of embedding parameters is optimized by using at least one optimization objective. The iterative modification process may enhance an accuracy and effectiveness of the secured system prompt. This optimization may lead to a more robust and secure machine learning model by refining the embedding parameters based on user queries, model responses, and the initial system prompt. The use of at least one optimization objective may ensure that the encoded set of embedding parameters is tailored to specific performance criteria, such as accuracy, relevance, and/or security.

It is also possible that the at least one optimization objective comprises minimizing a loss for at least one respective generated user query between the produced response for the at least one respective generated user query and a corresponding secured response, the corresponding secured response being produced by querying the at least one respective generated user query while using the encoded set of embedding parameters for processing the individual tokens of the system prompt. By minimizing this loss, it may be ensured that while using the secured system prompt, the machine learning model still provides analogous responses compared to those when using the (not encrypted) provided system prompt.

It is further possible that the at least one optimization objective comprises minimizing a cosine similarity between the set of embedding parameters and the generated encoded set of embedding parameters. This minimization of cosine similarity may increase the semantic difference between the original system prompt and the secured system prompt. By reducing the similarity between the embedding parameters, the machine learning model may learn a distinct representation for the encrypted prompt, making it less interpretable and harder to reverse-engineer the original system prompt. This enhanced security may protect sensitive information embedded within the system prompt.

If two optimization objectives are set at the same time, their respective importance may be balanced to prefer one over the other objective.

It is also possible that the encoded set of embedding parameters is optimized by using a gradient optimization in an embedding space of the machine learning model, a complete or partial space search over vocabulary tokens, an evolutionary optimization and/or a genetic optimization. It is thus possible that the encoded set of embedding parameters can be refined using various optimization techniques. Gradient optimization within the embedding space of the machine learning model may allow for iterative adjustments to the embedding parameters. Exploring the vocabulary tokens through complete or partial space searches may enable an identification of optimal embeddings that represent the system prompt effectively. Evolutionary and genetic optimization algorithms may mimic natural selection processes to evolve a set of embedding parameters that best capture the semantic meaning of the provided system prompt.

It is further possible that the modifying of the set of embedding parameters comprises:
- Providing or receiving at least one attack query, the at least one attack query being designed to extract the provided system prompt,
- Querying the machine learning model using the at least one attack query, the machine learning model outputting at least one extracted system prompt based on the querying,
- Analysing the at least one extracted system prompt regarding a similarity with respect to the provided system prompt.
In a possible additional step it may be required that the at least one extracted system prompt is the same as a specified prompt that is different from the provided system prompt. Providing the at least one attack query may be performed within the optimization or a test scenario. Receiving the at least one attack query may be performed in an actual attacking scenario. With these steps, potential vulnerabilities of the modified embedding parameters may be identified. This may be achieved by introducing the at least one attack query designed to elicit information about the original system prompt. By analyzing the extracted system prompts against the provided one, similarities can reveal weaknesses in the encoded set of embedding parameters. This analysis may allow for a refinement of the embedding parameters and a creation of a more robust secured system prompt, enhancing the security of the machine learning model.

It is also possible that the analysing comprises measuring a semantic and/or syntactic similarity between the extracted system prompt and the provided system prompt. It may thereby be evaluated how closely related the extracted system prompt is to the original system prompt. This may be performed to assess the effectiveness of the embedding parameter modification. The measurement of similarity may indicate if the encryption process has successfully altered the meaning of the system prompt while preserving its core functionality. Here, at least one metric may be used, for example an edit distance, SSIM (structural similarity), Jaccard similarity and/or latent semantic analysis (LSA).

It is possible for the method according to the invention to be used in a vehicle. The vehicle may, for example, be designed as a motor vehicle and/or passenger vehicle and/or at least partially automated/autonomous vehicle. The vehicle can have a vehicle device, e.g. for providing an autonomous driving function and/or a driver assistance system. The vehicle device can be designed to control and/or accelerate and/or brake and/or steer the vehicle at least partially automatically.

In another aspect of the invention, a computer program may be provided, in particular a computer program product, comprising instructions which, when the computer program is executed by at least one computer, cause the computer to carry out the method according to the invention. Thus, the computer program according to the invention can have the same advantages as have been described in detail with reference to a method according to the invention.

In another aspect of the invention, an apparatus for data processing may be provided, which is configured to execute the method according to the invention. As the apparatus, for example, at least one computer can be provided which executes the computer program according to the invention. The computer may include at least one processor that can be used to execute the computer program. Also, a non-volatile data memory may be provided in which the computer program may be stored and from which the computer program may be read by the processor for being carried out.

According to another aspect of the invention a computer-readable storage medium may be provided which comprises the computer program according to the invention and/or instructions which, when executed by at least one computer, cause the computer to carry out the steps of the method according to the invention. The storage medium may be formed as a data storage device such as a hard disk and/or a non-volatile memory and/or a memory card and/or a solid state drive. The storage medium may, for example, be integrated into the computer.

Furthermore, the method according to the invention may be implemented as a computer-implemented method. Alternatively or additionally, at least one of the disclosed method steps may be computer-implemented and/or automated.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: A method, computer program, a storage medium and apparatus according to embodiments of the invention,
- Fig. 2:: A method according to embodiments of the invention.

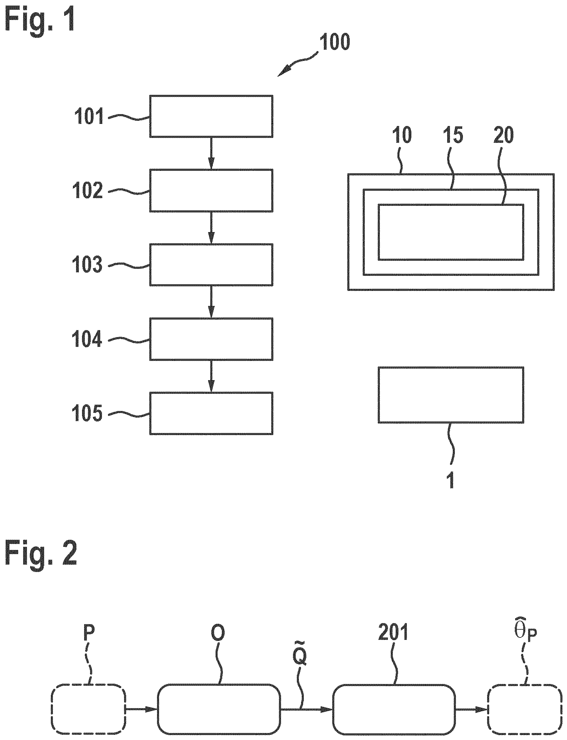

Fig. 1 shows a method 100, a technical system 1, particularly a vehicle or a production plant, a computer program 20, a storage medium 15 and apparatus 10 according to embodiments of the invention.

Fig. 1 particularly shows an embodiment of a method 10) for providing a secured system prompt for a machine learning model. In a first step 101, a system prompt is provided, the system prompt being parametrized by a set of embedding parameters to process individual tokens of the system prompt. In a second step 102, user queries are generated based on the provided system prompt. In a third step 103, the machine learning model is queried using the generated user queries and the provided system prompt, the machine learning model producing responses based on the querying. In a fourth step 104, the set of embedding parameters is modified in consideration of the provided system prompt, the generated user queries and the produced responses to generate an encoded set of embedding parameters. In a fifth step 105, the secured system prompt is provided by using the generated encoded set of embedding parameters to process the individual tokens of the system prompt, the secured system prompt being semantically different from the provided system prompt.

The present invention particularly aims to address limitations of current prompt extraction defence methods without relying on a knowledge of attack queries. According to embodiments of the invention, an encoding of a provided system prompt is performed to elicit similar performance from the machine learning model, particularly large language model, while altering its interpretation from an attacker's perspective. The provided system prompt may thereby be substituted entirely with a newly formulated secured system prompt. This approach may ensure that even if an attacker succeeds in extracting the provided system prompt, they will only obtain the secured system prompt that particularly looks like gibberish. As a result, the attacker may advantageously misinterpret it or mistakenly believe he has failed to retrieve the correct system prompt.

*P* may represent the provided system prompt that may guide the machine learning model while performing a specific task. The system prompt P may comprise *n* tokens {*p*₁, *p*₂,*..., pₙ*} that are processed by means of embedding parameters *θ_{P}* ∈ *R*^{*n*×*e*}, where e is an embedding dimension or a size of the embedding. The system prompt P may be divided into sentences, forming a set *S_{P}* = {*S*₁,*S*₂,...,*Sₘ*}*,* where m is the number of sentences. The machine learning model, particularly large language model, particularly parameterized by embedding parameters *θ*, may be deployed to map a user query Q to a response R, written as R *= f_{θ,θ_{P}} (Q)* or R *= f_{θ_{P}}* (*Q*) for brevity. The goal of the system prompt P is particularly to guide the machine learning model to generate a response R* for the relevant query Q*, which may follow a distribution ${D}_{Q}^{∗}$*.* The predicted response is particularly *R̂*, such that *R̂ = f_{θ_{P}}*(*Q**)*.*

The attacker's objective may be to extract the system prompt P or a semantically equivalent version of the system prompt P by issuing carefully designed queries to the machine learning model. An extracted system prompt G may be defined as *G = g (f_{θ_{P}}* (*A*₁)*,..., f_{θ_{P}}* (*Aₓ*))*,* where the attacker may submit *k* attack queries *A* and *g* may be a function to guess which response is the system prompt. For brevity, this may be written as $G = g {\left\{{f}_{{θ}_{P}}\left({A}_{i}\right)\right\}}_{i = 1}^{k}$. The sentences within G may be denoted as *S_{G}.* The attacker may operate without access to: (i) the system prompt P or its embedding parameters *θ_{P},* (ii) the machine learning model's parameters *θ*, and (iii) the relevant query *Q** and target response *R*.*

The defender particularly aims to implement countermeasures against prompt extraction attacks. After defence, the secured response for relevant queries *Q** may be denoted as *R̃*. The defender may control the machine learning model's response *R* and have access to parameters *θ* and *θ_{P}.* However, the defender: (i) cannot distinguish between malicious and benign queries, (ii) lack prior knowledge of the attacker's strategy, and (iii) are unknown of the relevant query *Q** and response *R*.* The defender's objectives may be: (i) utility preservation: to ensure *R̃* retains the functionality of *R̂* by maximizing the ratio *M*(*R̃, R*)*/*M(R̂, R**)*,* where *M* is a task-specific metric (e.g., accuracy, edit distance, Jaccard similarity, or latent semantic analysis (LSA)); and (ii) extraction difference: to ensure the extracted prompt *G* differs from *P,* reducing the attacker's success rate.

According to embodiments of the invention, a semantic-match (SM) metric may be used to evaluate the attacker's rate of success. This may be achieved by measuring a semantic consistency between the system prompt *P* and the extracted system prompt *G,* capturing cases where *G* conveys the same meaning as *P* but might comprise a different phrasing. For each sentence *Sᵢ* ∈ *S_{P},* a cosine similarity may be computed between *Sᵢ* and sentences in *S_{G},* for example using a sentence embedding model parameterized by *θ_{S}.* The most similar sentence ${S}_{j}^{∗} ∈$ *S_{G}* may be selected as: ${S}_{j}^{∗} = arg {max}_{{S}_{j}^{∗} ∈ {S}_{G}} sim \left({S}_{i}, {S}_{j}, {θ}_{S}\right) ,$ **where** *sim(Sᵢ, Sⱼ; θ_{S})* may denote the cosine similarity between the sentence embeddings of *Sᵢ* and Sⱼ, and *θ_{S}* may represent the parameters of the embedding model. Next, a mutual entailment (ME) between *Sᵢ* and ${S}_{j}^{∗}$ may be evaluated, for example using a pre-trained entailment classification model parameterized by *θ_{E}.* The SM metric is particularly defined as: $SM \left(P, G\right) = 1 \left[∀{S}_{i}∈{S}_{P}, ME\left({S}_{i}, {S}_{j}^{∗}, {θ}_{E}\right)\right] ,$ where $ME \left({S}_{i}, {S}_{j}^{∗}, {θ}_{E}\right)$ may indicate whether a sentence pair $\left({S}_{i}, {S}_{j}^{∗}\right)$ exhibits mutual entailment, as may be determined by the entailment model *θ_{E}*.

The method according to embodiments of the invention particularly aims to protect a secret system prompt *P* from extraction by generating a secured system prompt *P̃* as a replacement that performs similarly, but with different content and semantics. While the original system prompt *P* is preferably made of natural language, the encrypted prompt may, but does not have to obey this constraint. Instead, it may take the form of a sequence of characters that the machine learning model can process but that have no meaning to a human. This seemingly random series of characters may become a prompt *G* extracted by the attacker.

The prompt tuning according to the invention may be performed using various methods, e.g., gradient optimization in an embedding space of the machine learning model, a complete or partial space search over vocabulary tokens, an evolutionary and/or a genetic optimization. As the machine learning model's embedding space is particularly more expressive than the natural language space and inherently unreadable to humans, the system prompt's embedding parameters *θ_{P}* may be encrypted according to the invention with *θ̃_{P}* rather than the hard prompt *P̃. θ̃_{P}* may be referred to as the encrypted soft prompt. This encryption in embedding space may make it harder for the attacker to interpret when the machine learning model decodes *θ̃_{P}* into the secured system prompt *P̃.*

The encrypted soft prompt may be optimized to achieve two objectives: minimizing an expected loss over a distribution *D_{Q*}* between the original response *R̂* and the secured response *R̃* for the relevant query *Q*,* and minimizing the similarity loss between the extracted and original prompts. The joint optimization problem may be defined as follows: $arg {min}_{{{θ}^{˜}}_{P}} \left[{E}_{Q * ∼ {D}_{Q *}}\left[{L}_{CE}\left({f}_{{θ}_{P}}\left(Q*\right),{f}_{{\hat{θ}}_{P}}\left(Q*\right)\right)\right]+{L}_{SIM}\left(g\left({\left\{{f}_{{{θ}^{˜}}_{P}}\left({A}_{i}\right)\right\}}_{i = 1}^{k}\right),P\right)\right] ,$ where *L_{CE}* is particularly the cross-entropy loss, and *L_{SIM}* may measure the similarity between the extracted prompt G and the original system prompt *P.* Since the defender may not have access to the relevant query *Q*,* a language model may be used to generate the user query *Q̃* following the distribution *D_{Q̃} .* Moreover, as the defender may lack knowledge of the attack queries *A* and the extraction function g, the similarity loss between *P* and *G* may be approximated by minimizing the cosine similarity between *θ_{P}* and *θ̃_{P}.* This may lead to the following revised optimization problem: $arg {min}_{{{θ}^{˜}}_{P}} \left[{E}_{{Q}^{˜} ∼ {D}_{{Q}^{˜}}}\left[{L}_{CE}\left({f}_{{θ}_{P}}\left({Q}^{˜}\right),{f}_{{\hat{θ}}_{P}}\left({Q}^{˜}\right)\right)\right]+{L}_{SIM}\left({{θ}^{˜}}_{P}, {θ}_{P}\right)\right] ,$

Specifically, an oracle language model O may be used to generate potential user queries *Q̃*. These user queries preferably align with a specific focus, constraints, and/or preferences of the system prompt *P,* simulating natural interactions that guide users toward relevant information or recommendations while preserving the original system prompt's intent and structure. Once the proxy queries are generated, the defender can optimize the encrypted soft prompt according to step 201 in Fig. 2, for example by using gradient-based optimization, as defined in Equation (3). An overview of a method according to this embodiment of the invention is depicted in Fig. 2.

As the language model can only output natural language, thus *θ̃_{P}* will be decoded into *P̃* when the attacker attempts to steal. The key difference between *P̃* and *P* is that these are structurally and semantically different, effectively concealing the true nature of the original prompt. The encrypted prompt can elicit semantically similar responses as the secret system prompt.

This way, even if an attacker manages to extract *P̃* with attack query a, they will not gain access to the actual prompt *P,* as *P̃* encodes the same operational instructions in a different form, making it difficult for the attacker to understand or use the extracted prompt. With the encrypted prompt as the system prompt, the extracted prompt by the attacker particularly diverges from the original system prompt. Thus, the method according to the invention may provide a robust defence against prompt extraction attacks by obfuscating the original system prompt while preserving the machine learning model's performance.

The concept of "semantically different," as used throughout this description, can be understood as follows. To quantify this difference, a Semantic-Match (SM) metric is employed. This metric measures the semantic similarity between the original system prompt P and the secured system prompt *P̃.* The SM metric is calculated using a combination of cosine similarity of sentence embeddings and Mutual Entailment, as described earlier. A low SM value indicates a high degree of semantic difference. The goal is to minimize the SM metric between P and *P̃* while maintaining the functional equivalence of the prompts, ensuring the model responds similarly to the same queries regardless of which prompt is used. This balance of semantic difference and functional equivalence is key to the invention's effectiveness in preventing prompt extraction attacks.

The above explanation of the embodiments describes the present invention in the context of examples. Of course, individual features of the embodiments can be freely combined with each other, provided that this is technically reasonable, without leaving the scope of the present invention.

## Claims

1. A method (100) for providing a secured system prompt for a machine learning model, comprising the following steps:
- Providing (101) a system prompt, the system prompt being parametrized by a set of embedding parameters to process individual tokens of the system prompt,
- Generating (102) user queries based on the provided system prompt,
- Querying (103) the machine learning model using the generated user queries and the provided system prompt, the machine learning model producing responses based on the querying,
- Modifying (104) the set of embedding parameters in consideration of the provided system prompt, the generated user queries and the produced responses to generate an encoded set of embedding parameters,
- Providing (105) the secured system prompt by using the generated encoded set of embedding parameters to process the individual tokens of the system prompt, the secured system prompt being semantically different from the provided system prompt.

2. The method (100) of claim 1, **characterized in that** the modifying (104) of the set of embedding parameters is performed iteratively, wherein the encoded set of embedding parameters is optimized by using at least one optimization objective.

3. The method (100) of claim 2, **characterized in that** the at least one optimization objective comprises minimizing a loss for at least one respective generated user query between the produced response for the at least one respective generated user query and a corresponding secured response, the corresponding secured response being produced by querying the at least one respective generated user query while using the encoded set of embedding parameters for processing the individual tokens of the system prompt.

4. The method (100) of any one of claims 2 or 3, **characterized in that** the at least one optimization objective comprises minimizing a cosine similarity between the set of embedding parameters and the generated encoded set of embedding parameters.

5. The method (100) of any one of claims 2 to 4, **characterized in that** the encoded set of embedding parameters is optimized by using a gradient optimization in an embedding space of the machine learning model, a complete or partial space search over vocabulary tokens, an evolutionary optimization and/or a genetic optimization.

6. The method (100) of any one of the preceding claims, **characterized in that** the modifying (104) of the set of embedding parameters comprises:
- Providing or receiving at least one attack query, the at least one attack query being designed to extract the provided system prompt,
- Querying the machine learning model using the at least one attack query, the machine learning model outputting at least one extracted system prompt based on the querying,
- Analysing the at least one extracted system prompt regarding a similarity with respect to the provided system prompt.

7. The method (100) of claim 6, **characterized in that** the analysing comprises measuring a semantic and/or syntactic similarity between the extracted system prompt and the provided system prompt.

8. The method (100) of any one of the preceding claims, **characterized in that** the machine learning model is implemented in a technical system (1), particularly a vehicle or a production plant.

9. A computer program (20), comprising instructions which, when the computer program (20) is executed by at least one computer (10), cause the computer (10) to carry out the method (100) of any one of the preceding claims.

10. A data processing apparatus (10), comprising means for carrying out the method (100) of any one of claims 1 to 8.

11. A computer-readable storage medium (15) comprising instructions which, when executed by at least one computer (10), cause the computer (10) to carry out the steps of the method (100) of any one of claims 1 to 8.
